Europäisches Patentamt

European Patent Office

Office européen des brevets

(11) Veröffentlichungsnummer: **0 319 653**
**A2**

(12) ## EUROPÄISCHE PATENTANMELDUNG

(21) Anmeldenummer: **88113647.7**

(51) Int. Cl.4: **G02F 1/13 , G01S 3/78**

(22) Anmeldetag: **23.08.88**

(30) Priorität: **10.12.87 DE 3741856**

(43) Veröffentlichungstag der Anmeldung:
**14.06.89 Patentblatt 89/24**

(84) Benannte Vertragsstaaten:
**CH DE FR GB IT LI**

(71) Anmelder: **Messerschmitt-Bölkow-Blohm Gesellschaft mit beschränkter Haftung Robert-Koch-Strasse D-8012 Ottobrunn(DE)**

(72) Erfinder: **Kaltschmidt, Horst, Prof. Dr. Nibelungenstrasse 2 D-8014 Neubiberg(DE)**

(54) **Optronische störgeschützte Flugkörperortung.**

(57) Die Erfindung bezieht sich auf eine optronische, störgeschützte Flugkörperortung nach dem Mehrfach-Wanderblendenverfahren auf der Basis einer LC- oder DMD-Matrix mit inhärenter Ortsbestimmungseigenschaft, so daß das mechanisch bewegte Retikel entfällt. Die einzelnen Bildpunkte der LC-oder DMD-Matrix werden in einer "n x m"-Umgebung um den Leuchtsatzpunkt von einem Ortsbestimmungsrechner gesteuert individuell moduliert. Ausführungsbeispiele werden erläutert und in den Figuren der Zeichnung skizziert.

EP 0 319 653 A2

FIG. 3

## Optronische störgeschützte Flugkörperortung.

Die Erfindung bezieht sich auf eine optronische. störgeschützte Flugkörperortung unter Einsatz des Mehrfach-Wanderblendenverfahrens gemäß dem Gattungsbegriff des Anspruchs 1.

Es ist bekannt, als wirksames Mittel gegen Störlicht bzw. Störleuchtpunkte auf dem Retikel die Ausblendung durch eine mechanische Blende durchzuführen, so daß nur die Intensität des verbliebenen Leuchtsatzbildpunktes auf den Detektor wirkt. Nachteilig bei allen Blendenverfahren dieser Art ist, daß Störprozesse nicht erkannt und verfolgt werden können. Sobald ein hellerer Prozeß als der Nutzprozeß im Blendenfenster erscheint, überdeckt dieser den Nutzprozeß. Dies führte zur Konzeption des sogenannten Festblenden-Verfahrens, das darin besteht, daß kurz nach dem Start des Flugkörpers eine mechanische, zunächst große Lochblende vor das Retikel plaziert wird und danach zeitabhängig weitere, immer kleinere Blenden. Nachteilig hierbei ist, daß das System einerseits mit verhältnismäßig großen Blendenfenstern arbeiten muß, so daß Störer in der Nähe des Flugkörpers nicht wirksam ausgeblendet werden können und andererseits Flugkörperbewegungen mit größerer Ablage zur Visierlinie den Verlust des Flugkörpers zur Folge haben können.

Diesen Nachteil vermeidet das Wanderblendenverfahren, bei dem eine mechanische oder optronische transparenzgeschaltete Blende größen- und ortsveränderlich dem Leuchtsatzbildpunkt auf dem Retikel nachgeführt wird. Vorteilhaft ist hier gegenüber dem Festblendenverfahren, daß der Bewegungs- und Intensitätsverlauf des Nutzprozesses verfolgt und etwa mit einem Modellablauf ständig verglichen werden kann, so daß ein kurzfristig erscheinender Störprozeß erkannt und über ein Prädiktionsverfahren überwunden werden kann. Nachteilig aber ist, daß außerhalb des Blendenfensters keinerlei Informationen über Störprozesse gewonnen und ausgewertet werden können.

Das optronische transparenzschaltende Wanderblendenverfahren auf der Basis einer LC-Matrix vermeidet zwar eine mechanische Lösung mit bewegten Teilen, hat aber jedoch den Nachteil, daß die Transparenz nicht wie bei der mechanischen Wanderblende zwischen 0 und ∞ geschaltet werden kann. Vielmehr erreicht man heute im "offenen" Zustand nur etwa 70% und im "geschlossenen" Zustand ist die Transparenz nur um den Faktor von rund 300 zu erniedrigen.

Der vorliegenden Erfindung liegt die Aufgabe zugrunde eine optronische, störgeschützte Flugkörperortung zu schaffen, die frei von den vorgenannten Nachteilen ist, zusätzlich das mechanisch bewegte Retikel erübrigt und mit nur einer Fotodiode eine Scenerie abbildend erfassen kann ohne daß aufwendige mechanische Scanner hierzu erforderlich sind.

Diese Aufgabe wird durch die im Anspruch 1 aufgezeigten Maßnahmen gelöst. In den Unteransprüchen werden Ausgestaltungen und Weiterbildungen aufgezeigt und in der nachfolgenden Beschreibung werden Ausführungsbeispiele erläutert und in den Figuren der Zeichnung skizziert. Es zeigen:

Fig. 1 ein Schemabild eines Ausführungsbeispiels in schematischer Darstellung der prinzipiellen Anordnung,

Fig. 2 ein Schemabild eines einzelnen Pixels der LC- oder DMD-Mehrfachwanderblende in schematischer Darstellung,

Fig. 3 ein Schatlbild der Anordnung zur Erkennung von Störprozessen in einem "n x m"-Bereich in schematischer Darstellung,

Fig. 4 einen Filterplan mit den Durchlaßbereichen für die einzelnen Pixel,

Fig. 5 eine Tabelle I für die Pixel und ihren Frequenzinhalt,

Fig. 6 eine Tabelle II für einen beispielsweisen Frequenzplan.

Die hier vorgeschlagene optronische, störgeschützte Flugkörperortung basiert auf einer sogenannten "Pixel-individuell modulierbaren LC-oder DMD-Matrix", kurz PIM-Verfahren, genannt. Hier werden die einzelnen Bildpunkte der Matrix in einer sogenannten "n x m"-Umgebung um den Leuchtsatzpunkt 11a vom Ortsbestimmungsrechner - Prozessrechner 12 - gesteuert und individuell moduliert. Diese "n x m"-Umgebung ist auch als sogenanntes Informationsfenster anzusehen.

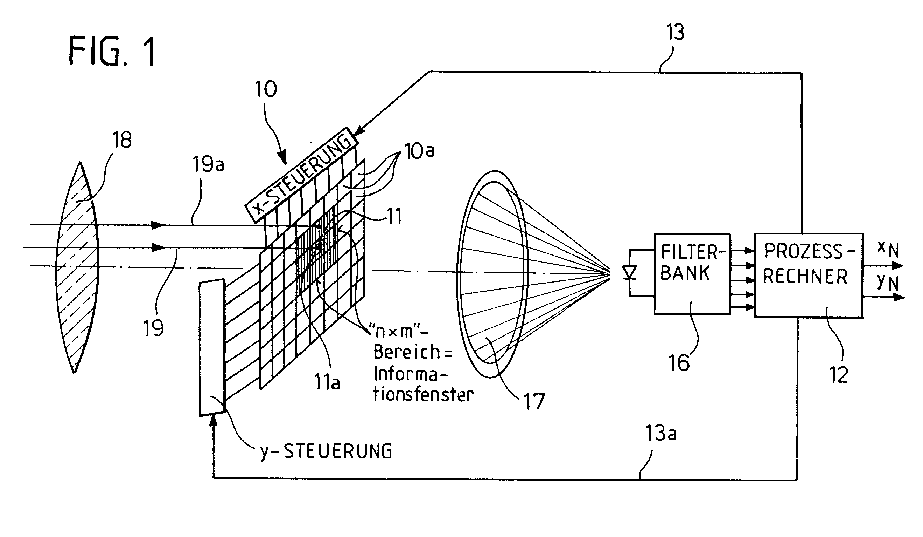

Wie in der Figur 1 veranschaulicht, wird über eine Empfangs- oder Eingangsoptik 18 die Scene, die den zu ortenden Flugkörperleuchtsatz samt den Störstrahlern enthält - also der Nutzstrahl 19 und der Störlichtstrahl 19a - auf die LC- oder DMD-Matrix 10 projiziert. Diese Matrix 10 setzt sich nun aus einer Vielzahl von Zellen 10a zusammen, die matrixartig miteinander verknüpft sind. Im Falle einer LC-Matrix ist jede dieser Zellen 10a vorderseitig und hinterseitig von einer transparenten Elektrode 14 abgeschlossen, wie in Fig., 2 skizziert ist. Die Spannung "u" steuert die Transparenz bei einfacher Anordnung zwischen ca. 90% und 10%.

In der LC-oder DMD-Matrlx 10 wird mittels der Ansteuerung durch den Prozeß-Rechner 12 über einen x-Draht 13 und einen y-Draht 13a ein durch die X-Y-Koordinaten bestimmtes Pixel 11 wechseltransparent geschaltet, während alle übrigen Zellen 10a intransparent bleiben. Das ausgewählte XY-Pixel 11 wird mit einer Wechselspannung bestimmter Frequenz, die jedoch unterhalb der höchsten Schaltfrequenz der LC-Zellen 10a liegt, beaufschlagt. Diese wird als Differenzfrequenz am nichtlinearen Schaltmechanismus der zugeführten x- und y-Frequenz gebildet. Dadurch geht nur von diesem angesteuerten Pixel 11 ein Wechsellicht aus, während von allen anderen LC-oder DMD-Zellen 10a ein abgeschwächtes Gleichlicht auf die Fotozelle 15 kommt. Durch ein von der Fotozelle 15 nachgeschaltetes Bandfilter 16, das auf die gewünschte Modulationsfrequenz abgestimmt ist, wird ein im Prinzip um viele Größenordnungen unterschiedliches Nutz-Pixelsignal im Vergleich zu den übrigen erhalten. In einem weiteren Ausführungsbeispiel ist auch eine Kohärenzdetektion mit verschiedenen Frequenzen möglich. Gleichzeitig ist aufgrund der vom Prozeß-Rechner 12 vorgenommenen XY-Ansteuerung des sogenannten Nutzpixels 11 auch dessen Ortslage im Matrix-Koordinatensystem bekannt. Somit erübrigt sich ein Retikel.

Dadurch ist sowohl die Ortsbestimmungsaufgabe für das Nutzpixel 11, auf dem der Flugkörper-Leuchtsatz abgebildet wird, als auch die vollständige Unterdrückung aller Stör-Pixel-Signale erreicht.

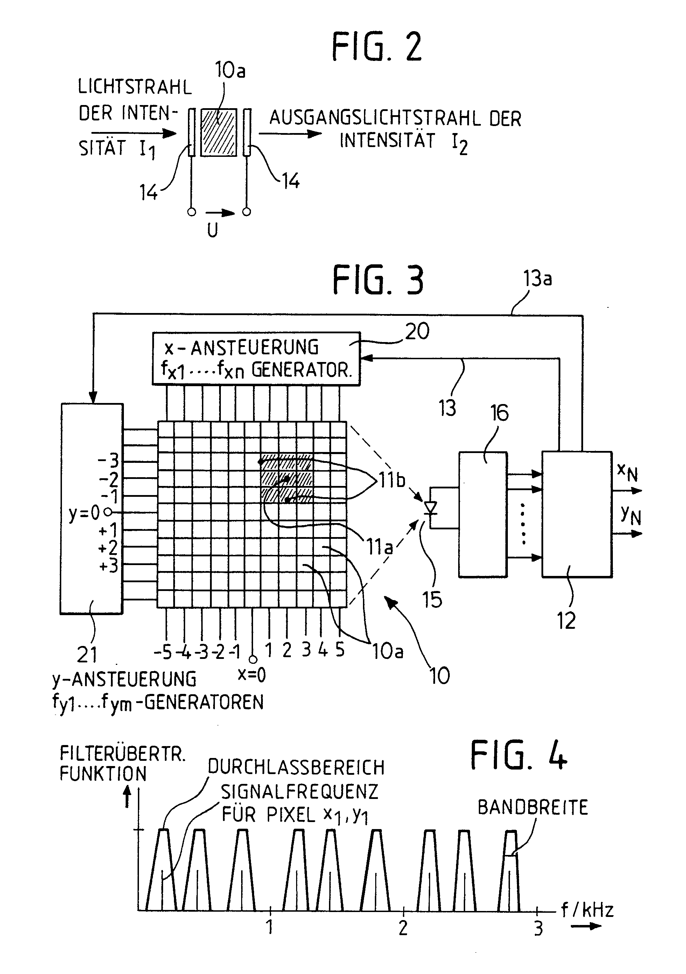

In dem in Fig. 3 skizzierten Ausführungsbeispiel können jedoch die dort vorhandenen Störprozesse erkannt und zur weiteren Unterscheidung gegenüber dem Nutzprozeß verwendet werden. Hierfür ein Beispiel:

Der Leuchtpunkt 11a liegf mit den Koordinaten $x_N = 2$ und $y_N = 2$ auf der LC-oder DMD-Matrix 10. Zwei Störlichtquellen liegen bei $x_s = 2$, $y_{s1} = 1$ und $x_{s2} = 0,5$, $y_{s2} = 2$. Die in diesem Ausführungsbeispiel gewählte 3 x 3-Umgebung ( n x m-Bereich) um den sogenannten Nutz-Leuchtpunkt-Pixel wird wie folgt erfaßt:

Der Prozeß-Rechner 12 kommandiert die Belegung der Kontaktdrähte $x_1$, $x_2$, und $x_3$ mit den drei Wechselspannungen der Frequenz $f_{x1}$, $f_{x2}$ und $f_{x3}$ und weiterhin die Kontaktdrähte $y_1$, $y_2$ und $y_3$ mit den Wechselspannungen der Frequenz $f_{y1}$, $f_{y2}$, und $f_{y3}$.

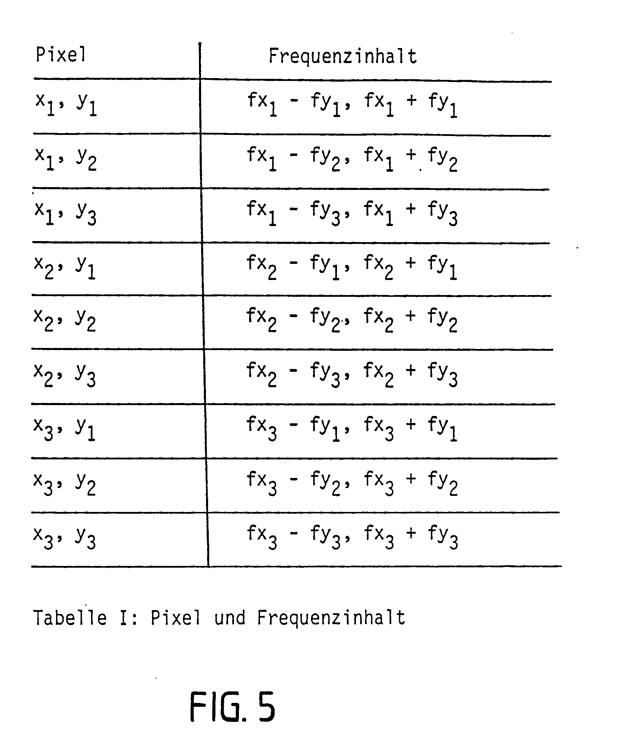

An den einzelnen Bildpunkten 14 entstehen dann Schwebungen mit den in der Tabelle I gemäß Fig. 5 aufgezeigten Summen- und Differenzfrequenzen. Nun macht man sich die Tiefpaßeigenschaft des LC-Schaltmechanismusses zunutze, wobei in dem hier beschriebenen Ausführungsbeispiel eine Grenzfrequenz $f_{gLC}$ von 3 kHz angenommen werden soll. Dann legt man $f_{x1}$, $f_{x2}$ $f_{x3}$, $f_{y1}$, $f_{y2}$ und $f_{y3}$ so, daß die Summenfrequenz oberhalb der LC-Matrix-Grenzfrequenz $f_{gLC}$ liegt. Weiterhin erstellt man einen Frequenzplan so, daß die Differenzfrequenzen alle unterhalb $f_{gLC}$ zu liegen kommen und eindeutig Pixel-individuell ausfallen, wie nachfolgend beispielsweise aufgeführt ist:

$f_{gLC}$ liegt auf 3 kHz und damit wählt man nun für:

$f_{x1}$ = 3 kHz
$f_{x2}$ = 4 kHz
$f_{x3}$ = 5 kHz
und
$f_{y1}$ = 2, 8 kHz
$f_{y2}$ = 2, 5 kHz
$f_{y3}$ = 2, 2 kHz

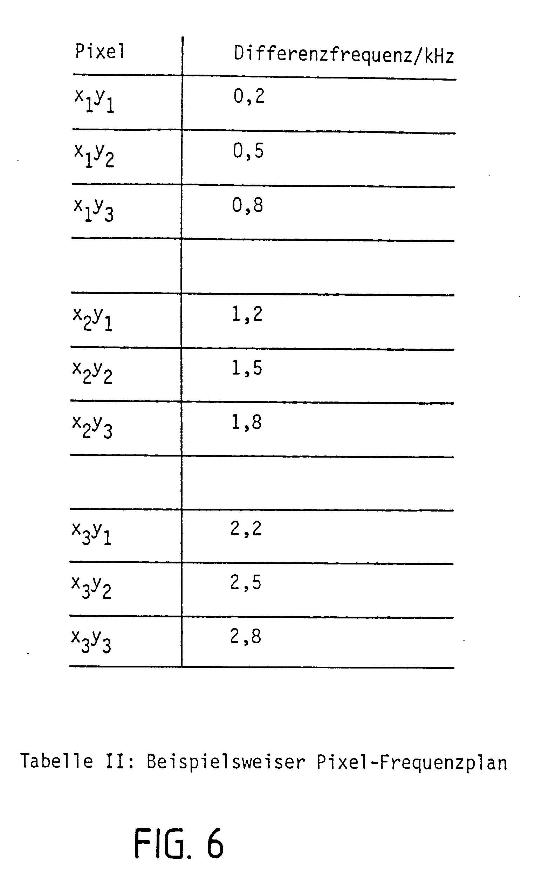

Dadurch ergibt sich der in Tabelle II der Figur 6 aufgezeigte Pixel-Frequenzplan. Nun muß man hierbei beachten, daß die kleinste Diffenrenzfrequenz noch so hoch liegt, daß die Einschwingzeit des zugehörigen Tiefpasses für das Gesamtlenksystem Bodenanlage - Flugkörper verträglich ist. Die Frequenzabstände müssen dann so groß sein, daß die nachfolgende Bandfilterbank 16 bzw. Tiefpaßfilterbank bei Kohärenzdetektion noch günstig zu realisieren ist. In dem hier gewählten Beispiel wird als Halbwertsbreite für die Bandfilter $\Delta f$ = 100 Hz gewählt.

Aus der aufgezeigten 3 x 3 Umgebung gelangt, falls jedes Pixel 11 beleuchtet ist, ein Signalgemisch von neun Wechsellichtsignalen mit den aus der Tabelle II ersichtlichen Frequenzen auf die Fotozelle 15. Die Amplituden sind proportional zur Helligkeit der einzelnen Punkte.

Die Fotozelle 15 speist nun parallel eine Bandfilterbank 16, die einzelnen Filterdurchlaßbereiche seien im Beispiel 100 Hz, so daß mit 10ms Einschwingzeit gerechnet werden muß. Der Filterplan ist in der Figur 4 dargestellt. Somit stehen dem Prozeßrechner 12 im gewählten Beispiel neun Signale mit Ortskoordinatenkenntnis zur Verfügung, ihre Amplituden repräsentieren die jeweilige Helligkeit der einzelnen Pixel.

Wandert nun der sogenannte "Nutzprozeß" von $x_2$, $y_2$ nach $x_1$, $y_1$, so kommandiert der Prozeßrechner 12 das Anlegen der drei "X"-Frequenzen an die Anschlußdrähte $x_0$, $x_1$ und $x_2$. Letztlich steuert er ein "Informationsfenster" auf der Matrix 10 entsprechend der Bewegung dieses Nutzprozesses. Selbstverständlich ist es auch möglich, "Teile" dieses Informationsfensters an beliebige Stellen der Matrix 10 zu steuern, um beispielsweise festzustellen, ob ein früher erkannter Störprozeß noch an der gleichen Stelle liegt.

In der Phase des Flugkörper-Einfangsprozesses wird noch vorgeschlagen, das Informationsfenster gröber aufzuteilen, d.h. mehrere benachbarte Pixel 11 zusammenzufassen, also parallel mit den gleichen Frequenzen anzusteuern. In vorliegendem Ausführungsbeispiel können beispielsweise je vier oder neun Pixel zusammengefaßt werden, so daß die unterscheidbare 3 x 3-Umgebung insgesamt 36 Pixel bzw. 81 Pixel umfaßt.

Mit der hier vorgeschlagenen PIM-Flugkörperortung ist es nun möglich, mit nur einer einzigen Fotozelle 15 eine Scenerie abbildend zu erfassen ohne anfällige und aufwendige mechanische Scanner einsetzen zu müssen. Dies ist besonders im Hinblick auf die noch immer aufwendige Produktion von Detektorzeilen oder gar Detektorarrays vorteilhaft, vor allem auch im Hinblick auf die Homogenität der Einzeldetektoren und das Kühlproblem. Mit der hier vorgeschlagenen Konzeption ist es weiterhin möglich, innerhalb eines großen Blickfeldes problemlos nur die Bezirke herauszugreifen, die von Interesse sind.

Mit dieser Konzeption ist nun die Möglichkeit einer "Intelligenten Informationsauswahl" gegeben und sie ist auch für andere Ortunmgsverfahren, wie beispielsweise Zielortung usw. anwendbar. Der beim Stand der Technik - geometrisch hochauflösende abbildende Systeme - oft nicht in Realzeit abarbeitbare Informationsfluß zwischen Sensor und Prozeßrechner wird durch das rechnergesteuerte Informationsfenster drastisch gesenkt.

## Ansprüche

1. Optronisch störgeschützte Flugkörperortung unter Einsatz eines Mehrfach-Wanderblendenverfahrens, bei dem optronisch transparenzgeschaltete Blenden ortsveränderlich dem Leuchtsatzbildpunkt und gegebenenfalls den Störbildpunkten nachgeführt werden, beispielsweise auf der Basis einer LC-Matrix, **dadurch gekennzeichnet,** daß die einzelnen Bildpunkte der LC-Matrix (10) oder DMD-Matrix (Deformable Mirror Device) in einer "n x m-Umgebung" um den Leuchtsatzpunkt (11) von einem Ortsbestimmungsrechner (12) gesteuert und individuell moduliert werden, wobei die matrixartig angeordneten LC-Zellen (10a) (liquid cristal cell) von transparenten Elektroden (14) vorder- und hinterseitig abgeschlossen sind und ein durch die x-, y-Koordinaten bestimmtes Pixel (11a) mit einer Wechselspannung bestimmter Frequenz beaufschlagt und dadurch transparent geschaltet wird und dessen Wechsellicht von einer Fotozelle 15) aufgenommen wird, der ein Bandfilter (16) zum Erhalt eines NutzPixelsignals nachgeschaltet ist.

2. Flugkörperortung nach Anspruch 1, **dadurch gekennzeichnet,** daß die Scene, die den zu ortenden Flugkörperleuchtsatz und den Störstrahler enthält, über eine Empfangsstrahloptik (18) auf einer LC- oder DMD-Matrix (10) abgebildet wird und deren Licht von einer Konzentrationslinse (17) der Fotozelle (15) zugeleitet und über eine Filterbank (16) dem Prozeßrechner (12) zur "n x m"-Fenstersteuerung (13, 13a) eingegeben wird.

3. Flugkörperortung nach den Ansprüchen 1 oder 2, **dadurch gekennzeichnet,** daß die an das individuell ausgewählte xy-Pixel (IIa) anzulegende Wechselspannungsfrequenz unterhalb der höchsten Schaltfrequenz des LC- oder DMD-Matrix-Elementes liegt.

4. Flugkörperortung nach den Ansprüchen 1 bis 3, **dadurch gekennzeichnet,** daß zum Erhalt des Nutz-Pixelsignals eine Kohärenzdetektion mit verschiedenen Frequenzen durchgeführt wird.

5. Flugkörperortung nach den Ansprüchen 1 bis 4, **dadurch gekennzeichnet,** daß in einer "n x m"-Umgebung um das Nutzpixel (11a) die dort vorhandenen Störprozesse erkannt und zur weiteren Unterscheidung gegenüber dem Nutzprozeß verwendet werden, indem die zwischen den einzelnen transparenten Elektroden oder Miniatur-Spiegelelementes (14) entstehenden Schwebungen mit bestimmten Summen- und Differenzfrequenzen unter Ausnutzung eines nichtlinearen Schaltmechanismusses so gelegt werden, daß die Summenfrequenzen oberhalb der Matrix-Grenzfrequenz und die Differenzfrequenzen alle unterhalb dieser Grenzfrequenz liegen.

6. Flugkörperortung nach Anspruch 5, **dadurch gekennzeichnet,** daß die kleinste Differenzfrequenz so hoch liegt, daß die Einschwingzeit des zugehörigen Tiefpasses für das Gesamtlenksystem Bodenanlage - Flugkörper verträglich ist.

7. Flugkörperortung nach den Ansprüche 1 bis 6, **dadurch gekennzeichnet,** daß in der Phase des Flugkörper-Einfangprozesses mehrere benachbarte Pixel (11a) des "n x m-Bereichs" parallel mit den gleichen X- und y-Frequenzen angesteuert werden und dadurch ein größeres und gröberes "Informationsfenster" erhalten wird.

8. Flugkörperortung nach Anspruch 7, **dadurch gekennzeichnet,** daß einzelne Teile des Informationsfensters an beliebige Stellen der LC- oder DMD-Matrix (10) steuerbar sind.

FIG. 1

EP 0 319 653 A2

EP 0 319 653 A2

# FIG. 2

LICHTSTRAHL
DER INTEN-
SITÄT $I_1$

10a

AUSGANGSLICHTSTRAHL DER
INTENSITÄT $I_2$

14

14

U

# FIG. 3

13a

x-ANSTEUERUNG
$f_{x1}....f_{xn}$ GENERATOR.

20

13

16

−3
−2
−1
y=0
+1
+2
+3

11b

11a

15

$x_N$

$y_N$

12

21

−5 −4 −3 −2 −1   1 2 3 4 5

x=0

10a

10

y-ANSTEUERUNG
$f_{y1}....f_{ym}$-GENERATOREN

# FIG. 4

FILTERÜBERTR.
FUNKTION

DURCHLASSBEREICH
SIGNALFREQUENZ
FÜR PIXEL $x_1, y_1$

BANDBREITE

1        2        3

f / kHz

10 392

| Pixel | Frequenzinhalt |
|-------|----------------|
| $x_1, y_1$ | $fx_1 - fy_1, \; fx_1 + fy_1$ |
| $x_1, y_2$ | $fx_1 - fy_2, \; fx_1 + fy_2$ |
| $x_1, y_3$ | $fx_1 - fy_3, \; fx_1 + fy_3$ |
| $x_2, y_1$ | $fx_2 - fy_1, \; fx_2 + fy_1$ |
| $x_2, y_2$ | $fx_2 - fy_2, \; fx_2 + fy_2$ |
| $x_2, y_3$ | $fx_2 - fy_3, \; fx_2 + fy_3$ |
| $x_3, y_1$ | $fx_3 - fy_1, \; fx_3 + fy_1$ |
| $x_3, y_2$ | $fx_3 - fy_2, \; fx_3 + fy_2$ |
| $x_3, y_3$ | $fx_3 - fy_3, \; fx_3 + fy_3$ |

Tabelle I: Pixel und Frequenzinhalt

# FIG. 5

10 392

| Pixel | Differenzfrequenz/kHz |
|---|---|
| $x_1y_1$ | 0,2 |
| $x_1y_2$ | 0,5 |
| $x_1y_3$ | 0,8 |
| | |
| $x_2y_1$ | 1,2 |
| $x_2y_2$ | 1,5 |
| $x_2y_3$ | 1,8 |
| | |
| $x_3y_1$ | 2,2 |
| $x_3y_2$ | 2,5 |
| $x_3y_3$ | 2,8 |

Tabelle II: Beispielsweiser Pixel-Frequenzplan

# FIG. 6

10 392